# FASCICULE DE BREVET EUROPEEN

(11) **EP 3 759 549 B1**
(45) Date de publication et mention de la délivrance du brevet: **07.06.2023**
(21) Numéro de dépôt: 19715152.5
(22) Date de dépôt: 27.02.2019
(51) Int. Cl.: G02F 1/35

(54) **OSCILLATEUR PARAMETRIQUE OPTIQUE**
OPTISCHER PARAMETRISCHER OSZILLATOR
OPTICAL PARAMETRIC OSCILLATOR

(30) Priorité: 01.03.2018 FR 1851802
(43) Date de publication de la demande: 06.01.2021
(73) Titulaire: Blue Industry and Science, 75010 Paris (FR)
(72) Inventeur: GEORGES DES AULNOIS, Johann, 78000 Versailles (FR); SZYMANSKI, Benjamin, 93310 Le Pré-Saint-Gervais (FR)
(74) Mandataire: Ipsilon
(86) Numéro de dépôt international: PCT/FR2019/050448
(87) Numéro de publication internationale: WO 2019/166740

(56) Documents cités:
- WO-A1-98/10497
- WO-A1-2013/186555
- US-A1- 2009 257 462
- US-B2- 8 542 435
- P. E. POWERS ET AL: "Continuous tuning of a continuous-wave periodically poled lithium niobate optical parametric oscillator by use of a fan-out grating design", OPTICS LETTERS, vol. 23, no. 3, 1 février 1998 (1998-02-01), page 159, XP055320431, US ISSN: 0146-9592, DOI: 10.1364/OL.23.000159

## Description

L'invention se rapporte à un oscillateur paramétrique optique.

Un oscillateur paramétrique optique (OPO) est un convertisseur de fréquences qui, à partir d'un rayonnement laser de pulsation ωₚ (pompe), produit deux nouveaux rayonnements appelés « signal » et « complémentaire », de pulsations respectives ωₛ et ω_{c} telles que ωₚ = ω_{s +} ω_{c}.

La conversion paramétrique de fréquences s'obtient en faisant propager le rayonnement pompe au travers d'un composant, généralement un cristal, présentant une non linéarité optique d'ordre 2. Si les paramètres physiques du cristal tels que sa température, son incidence par rapport au rayonnement pompe ou encore la périodicité de ses domaines ferroélectriques (comme le retournement périodique dans le cas d'un cristal tel que le niobate de lithium) sont modifiés, les valeurs ωₛ et ω_{c} peuvent être ajustées sur une très large gamme.

Ainsi, un OPO est une source de lumière cohérente, qui offre une très large gamme d'accord spectral, bien supérieure à celle des lasers. Cette caractéristique essentielle ouvre de nombreux champs d'applications aux OPO, comme par exemple l'analyse spectroscopique des gaz.

Un oscillateur paramétrique optique selon l'invention est un oscillateur paramétrique optique de type NesCOPO (de l'anglais *Nested Cavity Optical Parametric Oscillator*), qui est constitué à partir de deux cavités séparément résonnantes pour chacune des ondes générées par conversion paramétrique d'ordre deux. Un tel OPO est doublement résonnant avec un double passage de la pompe. Le document P. E. POWERS ET AL: "Continuous tuning of a continuouswave periodically poled lithium niobate optical parametric oscillator by use of a fan-out grating design",OPTICS LETTERS, vol. 23, no. 3, 1 février 1998 (1998-02-01), page 159 divulgue un cristal possédant un réseau de ligne présentant un axe de symétrie matérialisé par une ligne centrale.

La demande européenne EP2503387 décrit un oscillateur paramétrique de type NesCOPO, mettant en oeuvre un cristal de niobate de lithium de type « fan-out » à pas continûment variable. Un tel oscillateur possède l'inconvénient de comporter un cristal, dont les domaines ferroélectriques ne sont pas orientés de façon optimisée, induisant des nombres d'onde que la source ne peut pas émettre sans changer de paramètre, comme par exemple la température du cristal.

Un oscillateur paramétrique optique selon l'invention, comporte un cristal dont les motifs ferroélectriques ont été optimisés afin d'avoir accès à la totalité de la plage de longueur d'onde souhaitée, sans avoir à modifier certains paramètres liés au cristal, comme par exemple sa température.

Les notions de « supérieur », « inférieur », « avant » et « arrière » doivent être interprétées comme si le cristal était placé dans une position fonctionnelle dans la cavité optique de l'oscillateur paramétrique optique.

L'invention a pour objet un oscillateur paramétrique optique doublement résonnant comprenant un cristal de type fan-out présentant une non-linéarité optique d'ordre 2 et placé dans une cavité optique apte à réfléchir une pompe, ledit cristal comprenant une face d'entrée et une face de sortie par lesquelles passe l'axe optique, une face supérieure et une face inférieure.

La principale caractéristique d'un oscillateur paramétrique optique selon l'invention est que ledit cristal présente un réseau de lignes de changement de polarisation prenant naissance de façon séparée et resserrée au niveau d'une ligne supérieure fictive parallèle à la face supérieure du cristal, et se terminant de façon séparée et élargie soit au niveau d'une ligne inférieure fictive parallèle à la face inférieure du cristal, soit au niveau de la face d'entrée du cristal, deux lignes successives faisant entre elles un angle constant, ledit réseau commençant par une première ligne prenant naissance au niveau de la face de sortie du cristal et s'étendant vers la droite fictive inférieure en divergeant de ladite face de sortie, toutes les autres lignes s'inclinant progressivement et de façon monotone depuis ladite première droite vers la face d'entrée du cristal.

Autrement dit, une première ligne du réseau démarre au niveau de la face de sortie du cristal en divergeant de ladite face de sortie, et toutes les autres lignes sont inclinées vers la face d'entrée du cristal, depuis cette première ligne, en divergeant de plus en plus de la face de sortie. La première ligne est la seule ligne prenant naissance au niveau de la face de sortie, toutes les autres lignes du réseau étant éloignées de ladite face de sortie. Autrement dit, le réseau de lignes donne l'impression de tourner depuis la face de sortie du cristal vers la face d'entrée de celui-ci, en démarrant d'une première ligne n'ayant qu'un point de contact avec la face de sortie du cristal. Il est à signaler que toutes les lignes du réseau prennent naissance au niveau de la droite fictive supérieure, y compris la première ligne de changement de polarisation.

Avantageusement, les quatre faces du cristal sont planes.

De façon préférentielle, la face supérieure et la face inférieure sont parallèles, et la face d'entrée et la face de sortie sont parallèles. De cette manière, le cristal est de forme parallélépipédique avec une faible épaisseur.

Préférentiellement, les lignes situées juste après la première ligne et y compris ladite première ligne se terminent au niveau de la droite fictive inférieure, les lignes suivantes se terminant au niveau de la face d'entrée. L'expression « se terminant au niveau de la face d'entrée » doit être interprétée comme « débouchant dans la face d'entrée ».

De façon avantageuse, l'angle d'inclinaison constant entre deux lignes successives est de l'ordre de 0.1mrad. L'expression « de l'ordre de 0.1mrad » signifie égal à 0.1mrad plus ou moins 0.05mrad.

De façon préférentielle, le cristal est réalisé en niobate de lithium. Ce matériau est particulièrement mais non exclusivement adapté à un oscillateur optique paramétrique selon l'invention.

Préférentiellement, le réseau comprend une ligne originelle placée avant la première ligne, ladite ligne originelle prenant naissance au niveau de la face de sortie en dessous de la droite fictive supérieure et se terminant au niveau de la droite inférieure.

De façon avantageuse, la première ligne est inclinée par rapport à la face de sortie d'un angle qui est supérieur ou égal à l'angle constant séparant deux lignes successives. Cet angle d'inclinaison est préférentiellement compris entre 1 fois et 2 fois l'angle d'inclinaison constant entre deux lignes successives du réseau.

L'invention a pour autre objet un cristal, pour la réalisation d'un oscillateur selon l'invention, ledit cristal comprenant une face d'entrée et une face de sortie par lesquelles passe l'axe optique, une face supérieure et une face inférieure.

La principale caractéristique d'un cristal selon l'invention est que ledit cristal présente un réseau de lignes de changement de polarisation prenant naissance de façon resserrée au niveau d'une ligne supérieure fictive parallèle à la face supérieure du cristal, et se terminant de façon élargie soit au niveau d'une ligne inférieure fictive parallèle à la face inférieure du cristal, soit au niveau de la face d'entrée, deux lignes successives faisant entre elles un angle constant, ledit réseau commençant par une première ligne prenant naissance au niveau de la face de sortie du cristal et s'étendant vers la droite fictive inférieure, toutes les autres lignes s'inclinant progressivement et de façon monotone depuis ladite première droite vers la face d'entrée.

Un oscillateur paramétrique optique selon l'invention présente l'avantage de pouvoir atteindre chaque nombre d'onde sur une plage d'ondes données, en supprimant les zones inatteignables qui sont apparentes dans les oscillateurs paramétriques optiques actuels. Cette atteinte est obtenue au moyen d'un design particulier des lignes de changement de polarisation du réseau, permettant ainsi de s'affranchir d'une mise en température du cristal.

On donne, ci-après, une description détaillée d'un oscillateur paramétrique optique selon l'invention, en se référant aux figures suivantes :
- La figure 1 est une vue schématique d'un oscillateur paramétrique optique de l'état de la technique,
- La figure 2 est une vue de face d'un cristal de type « fan-out » utilisé dans un oscillateur optique paramétrique selon l'état de la technique,
- La figure 3 est un diagramme illustrant un exemple du nombre d'onde accessible en fonction de la position du cristal de la figure 2 dans la cavité optique d'un OPO de l'état de la technique,
- La figure 4 est une vue de face d'un cristal de type « fan-out » selon l'invention,
- La figure 5 est un diagramme illustrant un exemple du nombre d'onde accessible en fonction de la position du cristal de la figure 4 dans la cavité optique.

Pour la suite de la description les termes « OPO » et « Oscillateur Paramétrique optique » sont équivalents.

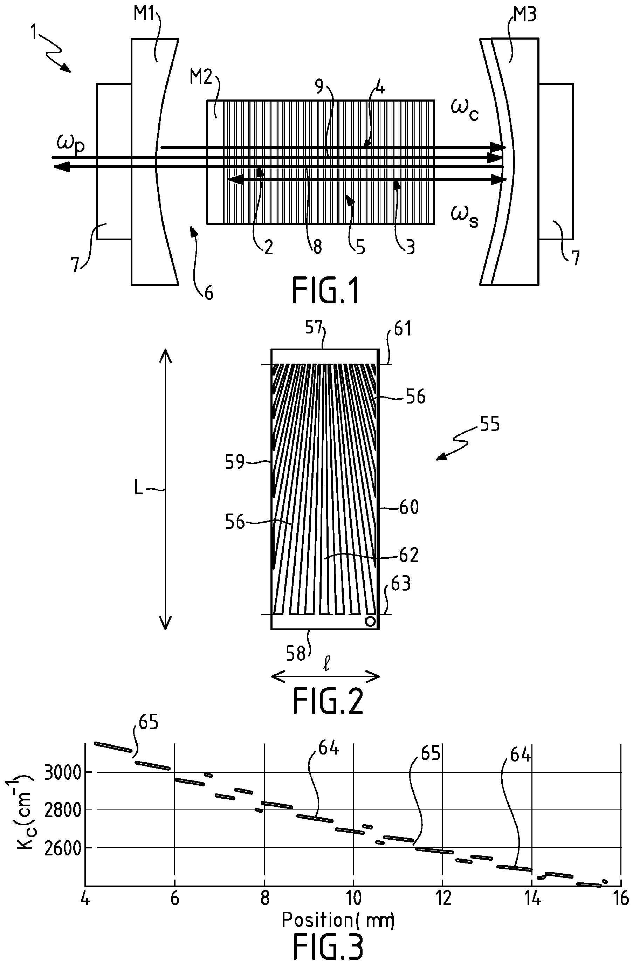

En se référant à la figure 1, un oscillateur paramétrique optique 1 est un système permettant de convertir une onde pompe 2 produite par un rayonnement laser, en deux ondes « signal » 3 et « complémentaire » 4, par l'intermédiaire d'un cristal 5 non linéaire, qui peut par exemple être réalisé en niobate de lithium. Ce cristal 5 est placé dans une cavité optique 6 délimitée par un premier miroir M1 et par un deuxième miroir M3. Ces deux miroirs M1 et M3 sont montés sur des éléments piézoélectrique 7 pour accorder la cavité optique 6. Le cristal 5 sur l'exemple illustré à la figure 1, comprend un troisième miroir M2. L'onde pompe 2 se convertit dans le cristal 5 placé dans la cavité optique 6. Dans le cadre d'un OPO 1 selon l'invention, le cristal 5 est de type PPLN (de l'anglais *Periodically Poled Lithium Niobate*).

L'architecture d'un OPO 1 selon l'invention, est aussi appelée NesCOPO (de l'anglais *Nested Cavity Optical Parametric Oscillator*). L'onde pompe 2 possède une composante incidente 8 en provenance du premier miroir M1, et une composante réfléchie 9 suite à la réflexion de ladite onde incidente 8 sur le deuxième miroir M3 de la cavité optique 6. A titre d'exemple illustratif et non limitatif, la longueur d'onde de la pompe 2 est de 1µm, celle de l'onde signal 3 est dans la plage comprise entre 1.4µm et 1.6 µm et celle de l'onde complémentaire 4 est dans la plage comprise entre 3.2µm et 4.2µm.

Un OPO 1 selon l'invention tire parti de la conversion non linéaire de fréquence au sein du cristal 5 placé dans la cavité optique 6. Cet OPO 1 est doublement résonnant avec double passage de la pompe 2 (composante incidente 8 et composante réfléchie 9).

En se référant à la figure 2, un cristal 55 existant de type « fan-out » (éventail) possède un réseau de lignes 56 de changement de polarisation permettant d'obtenir une variation continue de la longueur d'onde générée, en déplaçant ledit cristal 55 au sein de la cavité optique 6. Schématiquement, un tel cristal 55 est de forme parallélépipédique et possède,
- Une face supérieure plane 57,
- Une face inférieure plane 58 et parallèle à la surface supérieure 57,
- Une face d'entrée 59 plane par laquelle l'onde pompe 2 issue du premier miroir M1 va pénétrer dans le cristal 55,
- Une face de sortie 60 plane et parallèle à la surface d'entrée 59,
- Deux faces latérales 61 rectangulaires et parallèles, délimitées chacune par la face supérieure 57, la face inférieure 58, la face d'entrée 59 et la face de sortie 60.

Un tel cristal 55 peut, par exemple, présenter une longueur L de 10mm, une largeur l de 5mm et une épaisseur de 1mm. Ces dimensions illustrent un exemple adapté à un OPO selon l'invention, mais qui n'est pas limitatif.

Les lignes de changement de polarisation 56 sont organisées au sein du cristal 55 de sorte qu'elles prennent naissance au niveau d'une droite fictive supérieure 61, qui est parallèle à la paroi supérieure 57 et située à proximité de celle-ci. Ces lignes 56 prennent naissance de façon séparée et resserrée sur ladite droite 61 et sur toute la largeur du cristal 55. Une ligne centrale 62 part du milieu de la droite supérieure 61 et s'étend parallèlement à la face d'entrée 59 ou à la face de sortie 60, vers une droite fictive inférieure 63, qui est parallèle à la droite fictive supérieure 61, et qui est située à proximité de la face inférieure 58 du cristal 55. Une partie des lignes 56 qui sont implantées sur la droite supérieure 61 d'un côté de la ligne centrale 62, s'étendent vers la droite fictive inférieure 63 pour celles qui sont les plus proches de ladite ligne centrale 62, et vers la face de sortie 60 pour celles qui sont les plus éloignées de ladite ligne centrale 62. Une partie des lignes 56 qui sont implantées sur la droite supérieure 61 de l'autre côté de la ligne centrale 62, s'étendent vers la droite fictive inférieure 63 pour celles qui sont les plus proches de ladite ligne centrale 62, et vers la face d'entrée 59 pour celles qui sont les plus éloignées de ladite ligne centrale 62. Deux lignes 56 successives du réseau divergent l'une de l'autre, lorsqu'elles s'étendent depuis leur implantation sur la droite supérieure 61 vers la droite inférieure 63 ou vers la face d'entré 59 ou de sortie 60. De cette manière, deux lignes de changement de polarisation successives 56 font entre elles un angle constant, préférentiellement égal à 0.1mrad.

Pour résumer, le réseau de lignes 56 présente un axe de symétrie matérialisé par la ligne centrale 62, une partie des lignes 56 située d'un côté de ladite ligne centrale 62 ayant tendance à s'étendre vers la face d'entrée 59, et une autre partie desdites lignes 56 située de l'autre côté de ladite ligne centrale 56, ayant tendance à s'étendre vers la face de sortie 60.

La pompe 2, dont la dimension du faisceau peut par exemple être de l'ordre de 100 µm, arrive sur la face d'entrée 59 et traverse le cristal 55 pour ressortir de celui-ci au niveau de la face de sortie 60. Le cristal 55 peut être translaté au sein de la cavité optique 6, le long d'un axe longitudinal dudit cristal 55 pour changer les paramètres de la conversion et atteindre un nombre d'onde donné.

Or, en se référant à la figure 3, avec un tel cristal 55 de type « fan-out », les conditions de conversion au sein d'un NesCOPO, ne permettent généralement d'accéder qu'à seulement certaines plages 64 de longueur d'onde séparées par des plages inaccessibles 65, comme l'indiquent les trous sur le diagramme, et ce, pour différentes positions du cristal 55 dans la cavité optique 6. En effet, le cristal 55 est amené à être translaté dans la cavité optique 6 le long d'un axe parallèle à un axe longitudinal dudit cristal 55, de façon à obtenir toutes les longueurs d'onde possibles sur une plage donnée. Or, les zones exploitables ne se chevauchent pas, et laissent apparaitre des nombres d'onde inatteignables. Cela est causé par des conditions sur la phase relative entre les trois ondes (pompe, signal, complémentaire) qui est importante à prendre en compte dans les NesCOPO.

Actuellement, des techniques existent pour éviter ces trous 65, mais sont, soit très chères, soit industriellement inapplicables, soit lentes.

Un OPO selon l'invention, présente un cristal 105 dont les lignes de polarisations 106 sont organisées sur ledit cristal 105, de telle manière qu'elles permettent d'accéder à toutes les longueurs d'onde, lorsque le cristal 105 est translaté dans la cavité optique 6 le long d'un axe longitudinal de celui-ci.

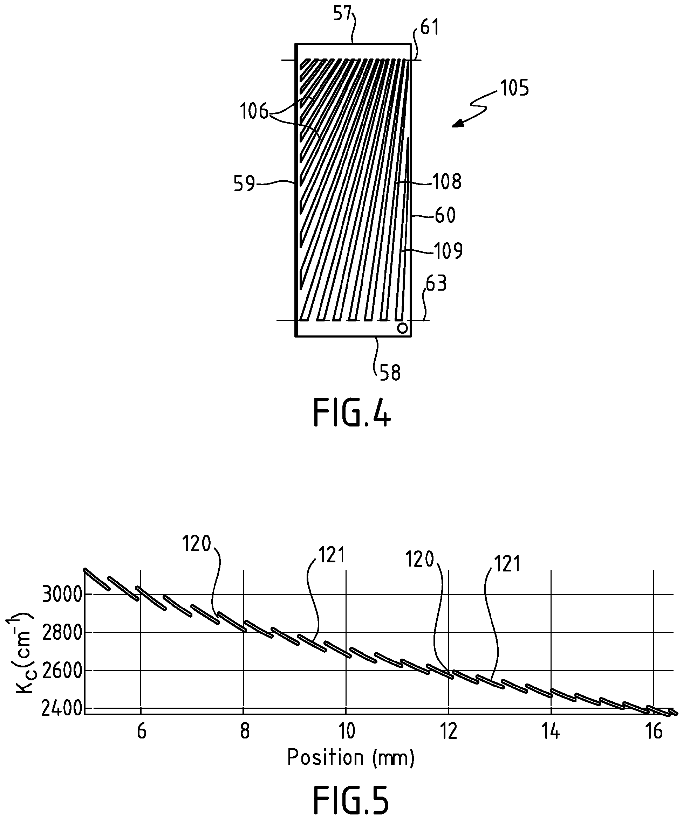

En se référant à la figure 4, le cristal 105 d'un OPO selon l'invention, se distingue de celui décrit ci-avant, uniquement sur l'ordonnancement des lignes de changement de polarisation 106 au sein du cristal 105. En effet, les lignes de changement de polarisation 106 sont organisées au sein du cristal 105 de sorte qu'elles prennent naissance au niveau de la droite fictive supérieure 61 précédemment décrite, qui est parallèle à la paroi supérieure 57 et située à proximité de celle-ci. Ces lignes 106 prennent naissance de façon séparée et resserrée sur ladite droite 61 et sur toute la largeur du cristal 105. Chaque ligne de changement de polarisation 106 du réseau d'un cristal 105 d'un OPO selon l'invention, se déduit de chaque ligne de changement de polarisation 56 du réseau du cristal 55 précédemment décrit, par une rotation dans le sens des aiguilles d'une montre, autour de son point d'intersection avec la droite fictive supérieure 61, d'un angle constant compris entre 1° et 10°. De cette manière, chaque ligne de changement de polarisation 106 d'un cristal 105 selon l'invention, a pivoté vers la face d'entrée 59, d'un angle compris entre 1° et 10° depuis sa position sur le cristal existant 55 illustré à la figure 2. Pour un cristal ayant une longueur de 10mm, une largeur de 5mm et une épaisseur de 1mm, cet angle est avantageusement égal à 2.8°.

Autrement dit, le réseau de lignes de changement de polarisation 106 commence par une première ligne 108 prenant naissance sur la face de sortie 60 du cristal 105 au niveau de la droite fictive supérieure 61, et s'étendant vers la droite fictive inférieure 63 précédemment décrite, toutes les autres lignes s'inclinant progressivement et de façon monotone depuis ladite première ligne 108 vers la face d'entrée 59. Deux lignes 106 successives du réseau divergent l'une de l'autre, lorsqu'elles s'étendent depuis leur implantation sur la droite supérieure 61 vers la droite inférieure 63 ou vers la face d'entré 59. De cette manière, deux lignes de changement de polarisation successives 106 font entre elles un angle constant, préférentiellement égal à 0.1mrad, tout comme c'est le cas dans le cristal existant 55 précédemment décrit. Les lignes 106 situées juste après la première ligne 108 s'étendent jusqu'à la droite fictive inférieure 63, les autres lignes débouchant sur la face d'entrée 59 du cristal 105.

Le réseau comprend également une ligne originelle 109 placée entre la première ligne 108 et la face de sortie 60, cette ligne originelle 109 prenant naissance au niveau de la face de sortie 60, en dessous du point au niveau duquel prend naissance la première ligne 108 sur ladite face de sortie 60, et se terminant au niveau de la droite fictive inférieure 63. Cette ligne originelle 109 est plus courte que la première ligne 108.

Pour résumer, par rapport à un axe s'étendant le long de la face de sortie 60, toutes les lignes de changement de polarisation 106 sont inclinées dans le même sens et du même côté (vers la face d'entrée 59) dans un cristal 105 selon l'invention. Dans un cristal 55 déjà existant, par rapport à un axe central, parallèle à la face d'entrée 59 ou à la face de sortie 60, elles sont inclinées de façon symétrique et de part et d'autre dudit axe, dans deux sens opposés (vers la face d'entrée 59 et vers la face de sortie 60).

La période typique d'un motif dans un cristal 105 de type PPLN est de 30 µm.

En se référant à la figure 5, en translatant le cristal 105 le long d'un axe parallèle à la face de sortie 60 ou à la face d'entrée 59, un OPO selon l'invention permet d'atteindre toutes les longueurs d'onde sur une plage donnée. En effet, différents essais ont montré que, grâce à l'utilisation d'un cristal 105 de type PPLN avec le nouveau réseau de lignes de changement polarisation 106 décrit ci-avant, chaque nombre d'onde peut être atteint. En se focalisant sur une position 120 du cristal 105 où les conditions d'accord de phase sont exactement non-constructives, il est toujours possible d'atteindre la longueur d'onde souhaitée, car les zones exploitables 121 se chevauchent.

## Revendications

1. Oscillateur paramétrique optique (1) doublement résonnant comprenant un cristal (5, 55, 105) de type fan-out présentant une non-linéarité optique d'ordre 2 et placé dans une cavité optique (6) apte à réfléchir une pompe (2), ledit cristal (5, 55, 105) comprenant une face d'entrée (59) et une face de sortie (60) par lesquelles passe l'axe optique, une face supérieure (57) et une face inférieure (58), **caractérisé en ce que** ledit cristal (105) présente un réseau de lignes (106) de changement de polarisation prenant naissance de façon séparée et resserrée au niveau d'une ligne supérieure fictive (61) parallèle à la face supérieure (57) du cristal (105), et se terminant de façon séparée et élargie soit au niveau d'une ligne inférieure fictive (63) parallèle à la face inférieure (58) du cristal (105), soit au niveau de la face d'entrée (59) du cristal (105), et **en ce que** deux lignes (106) successives font entre elles un angle constant, ledit réseau commençant par une première ligne (108) prenant naissance au niveau de la face de sortie (60) du cristal (105) et s'étendant vers la droite fictive inférieure (63) en divergeant de ladite face de sortie (60), toutes les autres lignes s'inclinant progressivement et de façon monotone depuis ladite première droite (108) vers la face d'entrée (59) du cristal (105).

2. Oscillateur paramétrique optique selon la revendication 1, **caractérisé en ce que** les quatre faces (57, 58, 59, 60) du cristal (105) sont planes.

3. Oscillateur paramétrique optique selon l'une quelconque des revendications 1 ou 2, **caractérisé en ce que** la face supérieure (57) et la face inférieure (58) sont parallèles, et **en ce que** la face d'entrée (59) et la face de sortie (60) sont parallèles.

4. Oscillateur paramétrique optique selon l'une quelconque des revendications 1 à 3, **caractérisé en ce que** les lignes (106) situées juste après la première ligne (108) et y compris ladite première ligne (108) se terminent au niveau de la droite fictive inférieure (63), et **en ce que** les lignes suivantes (106) se terminent au niveau de la face d'entrée (59).

5. Oscillateur paramétrique optique selon l'une quelconque des revendications 1 à 4, **caractérisé en ce que** l'angle d'inclinaison constant entre deux lignes (106) successives est de l'ordre de 0.1mrad.

6. Oscillateur paramétrique optique selon l'une quelconque des revendications 1 à 5, **caractérisé en ce que** le cristal (105) est réalisé en niobate de lithium.

7. Oscillateur paramétrique optique selon l'une quelconque des revendications 1 à 6, **caractérisé en ce que** le réseau comprend une ligne originelle (109) placée avant la première ligne (108), et **en ce que** ladite ligne originelle (109) prend naissance au niveau de la face de sortie (60) en dessous de la droite fictive supérieure (61) et se termine au niveau de la droite inférieure (63).

8. Oscillateur paramétrique optique selon l'une quelconque des revendications 1 à 7, **caractérisé en ce que** la première ligne (108) est inclinée par rapport à la face de sortie (60) d'un angle qui est supérieur ou égal à l'angle constant séparant deux lignes successives (106).

9. Cristal pour la réalisation d'un oscillateur selon l'une quelconque des revendications 1 à 8, ledit cristal (5, 55, 105) comprenant une face d'entrée (59) et une face de sortie (60) par lesquelles passe l'axe optique, une face supérieure (57) et une face inférieure (58), **caractérisé en ce que** ledit cristal (105) présente un réseau de lignes (106) de changement de polarisation prenant naissance de façon séparée et resserrée au niveau d'une ligne supérieure fictive (61) parallèle à la face supérieure (57) du cristal (105), et se terminant de façon séparée et élargie soit au niveau d'une ligne inférieure fictive (63) parallèle à la face inférieure (58) du cristal (105), soit au niveau de la face d'entrée (59), et **en ce que** deux lignes (106) successives font entre elles un angle constant, ledit réseau commençant par une première ligne (108) prenant naissance au niveau de la face de sortie (60) du cristal (105) et s'étendant vers la droite fictive inférieure (63) en divergeant de ladite face de sortie (60), toutes les autres lignes s'inclinant progressivement et de façon monotone depuis ladite première droite (108) vers la face d'entrée (59) du cristal (105).

## Patentansprüche

1. Doppelt resonanter optischer parametrischer Oszillator (1), umfassend ein Kristall (5, 55, 105) vom Typ Fan-Out, das eine optische Nicht-Linearität zweiter Ordnung aufweist, und platziert in einem optischen Hohlraum (6), der ausgelegt ist, um einen Pumplaser (2) zu reflektieren, wobei das Kristall (5, 55, 105) eine Eingangsseite (59) und eine Ausgangsseite (60), durch die die optische Achse verläuft, eine obere Seite (57) und eine untere Seite (58) umfasst, **dadurch gekennzeichnet, dass** das Kristall (105) ein Netz von Linien (106) zur Änderung der Polarisation aufweist, das auf getrennte und wieder verengte Weise auf der Ebene einer gedachten oberen Linie (61) parallel zur oberen Seite (57) des Kristalls (105) seinen Ausgang nimmt und auf getrennte und verlängerte Weise entweder auf der Ebene einer gedachten unteren Linie (63) parallel zur unteren Seite (58) des Kristalls (105) oder auf der Ebene der Eingangsseite (59) des Kristalls (105) endet, und dadurch, dass zwei aufeinanderfolgende Linien (106) zwischen sich einen konstanten Winkel bilden, wobei das Netz mit einer ersten Linie (108) beginnt, die auf der Ebene der Ausgangsseite (60) des Kristalls (105) ihren Ausgang nimmt und sich hin zur unteren gedachten Geraden (63) erstreckt, indem es von der Ausgangsseite (60) abweicht, wobei sich alle anderen Linien schrittweise und auf gleichbleibende Weise von der ersten Geraden (108) hin zur Eingangsseite (59) des Kristalls (105) neigen.

2. Optischer parametrischer Oszillator nach Anspruch 1, **dadurch gekennzeichnet, dass** die vier Seiten (57, 58, 59, 60) des Kristalls (105) eben sind.

3. Optischer parametrischer Oszillator nach einem der Ansprüche 1 oder 2, **dadurch gekennzeichnet, dass** die obere Seite (57) und die untere Seite (58) parallel sind, und dadurch, dass die Eingangsseite (59) und die Ausgangsseite (60) parallel sind.

4. Optischer parametrischer Oszillator nach einem der Ansprüche 1 bis 3, **dadurch gekennzeichnet, dass** die Linien (106), die sich direkt nach der ersten Linie (108) befinden, und darin eingeschlossen die erste Linie (108), auf der Ebene der unteren gedachten Gerade (63) enden, und dadurch, dass die folgenden Linien (106) auf der Ebene der Eingangsseite (59) enden.

5. Optischer parametrischer Oszillator nach einem der Ansprüche 1 bis 4, **dadurch gekennzeichnet, dass** der Winkel mit konstanter Neigung zwischen zwei aufeinanderfolgenden Linien (106) im Bereich von 0,1 mrad liegt.

6. Optischer parametrischer Oszillator nach einem der Ansprüche 1 bis 5, **dadurch gekennzeichnet, dass** das Kristall (105) aus Lithiumniobat hergestellt ist.

7. Optischer parametrischer Oszillator nach einem der Ansprüche 1 bis 6, **dadurch gekennzeichnet, dass** das Netz eine ursprüngliche Linie (109) umfasst, die vor der ersten Linie (108) platziert ist, und dadurch, dass die ursprüngliche Linie (109) auf der Ebene der Ausgangsseite (60) unter der oberen gedachten Gerade (61) ihren Ausgang nimmt und auf der Ebene der unteren Gerade (63) endet.

8. Optischer parametrischer Oszillator nach einem der Ansprüche 1 bis 7, **dadurch gekennzeichnet, dass** die erste Linie (108) mit Bezug auf die Ausgangsseite (60) um einem Winkel geneigt ist, der größer als oder gleich wie der konstante Winkel ist, der zwei aufeinanderfolgende Linien (106) trennt.

9. Kristall zur Herstellung eines Oszillators nach einem der Ansprüche 1 bis 8, wobei das Kristall (5, 55, 105) eine Eingangsseite (59) und eine Ausgangsseite (60), durch die die optische Achse verläuft, eine obere Seite (57) und eine untere Seite (58) umfasst, **dadurch gekennzeichnet, dass** das Kristall (105) ein Netz von Linien (106) zur Änderung der Polarisation aufweist, das auf getrennte und wieder verengte Weise auf der Ebene einer gedachten oberen Linie (61) parallel zur oberen Seite (57) des Kristalls (105) seinen Ausgang nimmt und auf getrennte und verlängerte Weise entweder auf der Ebene einer gedachten unteren Linie (63) parallel zur unteren Seite (58) des Kristalls (105) oder auf der Ebene der Eingangsseite (59) endet, und dadurch, dass zwei aufeinanderfolgende Linien (106) zwischen sich einen konstanten Winkel bilden, wobei das Netz, das mit einer ersten Linie (108) beginnt, auf der Ebene der Ausgangsseite (60) des Kristalls (105) seinen Ausgang nimmt und sich hin zur unteren gedachten Geraden (63) erstreckt, indem es von der Ausgangsseite (60) abweicht, wobei sich alle anderen Linien schrittweise und auf gleichbleibende Weise von der ersten Geraden (108) hin zur Eingangsseite (59) des Kristalls (105) neigen.

## Claims

1. A doubly resonant optical parametric oscillator (1) comprising a fan-out crystal (5, 55, 105) having an optical non-linearity of order 2 and placed in an optical cavity (6) able to reflect a pump (2), said crystal (5, 55, 105) having an entrance face (59) and an exit face (60) through which the optical axis passes, an upper face (57) and a lower face (58), **characterized in that** said crystal (105) includes a grating of polarity-inverted lines (106) originating separately and in a narrowly spaced manner at a fictional upper line (61) that is parallel to the upper face (57) of the crystal (105), and ending separately and in a widely spaced manner either at a fictional lower line (63) that is parallel to the lower face (58) of the crystal (105), or at the entrance face (59) of the crystal (105), and **in that** two successive lines (106) make a constant angle between each other, said grating starting with a first line (108) originating at the exit face (60) of the crystal (105) and extending towards the fictional lower straight line (63) while diverging from said exit face (60), all the other lines gradually and monotonically inclining from said first straight line (108) toward the entrance face (59) of the crystal (105).

2. The optical parametric oscillator according to claim 1, **characterized in that** the four faces (57, 58, 59, 60) of the crystal (105) are planar.

3. The optical parametric oscillator according to any one of claims 1 or 2, **characterized in that** the upper face (57) and the lower face (58) are parallel, and **in that** the entrance face (59) and the exit face (60) are parallel.

4. The optical parametric oscillator according to any one of claims 1 to 3, **characterized in that** the lines (106) located just after the first line (108) including said first line (108) end at the fictional lower straight line (63), and **in that** the following lines (106) end at the entrance face (59).

5. The optical parametric oscillator according to any one of claims 1 to 4, **characterized in that** the constant angle of inclination between two successive lines (106) is about 0.1 mrad.

6. The optical parametric oscillator according to any one of claims 1 to 5, **characterized in that** the crystal (105) is made of lithium niobate.

7. The optical parametric oscillator according to any one of claims 1 to 6, **characterized in that** the grating comprises an original line (109) placed before the first line (108), and **in that** said original line (109) originates at the exit face (60) below the fictional upper straight line (61) and ends at the lower straight line (63).

8. The optical parametric oscillator according to any one of claims 1 to 7, **characterized in that** the first line (108) is inclined with respect to the exit face (60) by an angle that is larger than or equal to the constant angle separating two successive lines (106).

9. A crystal for producing an oscillator according to any one of claims 1 to 8, said crystal (5, 55, 105) comprising an entrance face (59) and an exit face (60), through which faces the optical axis passes, an upper face (57) and a lower face (58), **characterized in that** said crystal (105) includes a grating of polarity-inverted lines (106) originating separately and in a narrowly spaced manner at a fictional upper line (61) that is parallel to the upper face (57) of the crystal (105), and ending separately and in a widely spaced manner either at a fictional lower line (63) that is parallel to the lower face (58) of the crystal (105), or at the entrance face (59), and **in that** two successive lines (106) make a constant angle between each other, said grating starting with a first line (108) originating at the exit face (60) of the crystal (105) and extending toward the fictional lower straight line (63) while diverging from said exit face (60), all the other lines gradually and monotonically inclining from said first straight line (108) toward the entrance face (59) of the crystal (105).
